# EUROPEAN PATENT APPLICATION

(11) **EP 3 351 592 A1**
(43) Date of publication of application: **25.07.2018**
(21) Application number: 16846459.2
(22) Date of filing: 13.09.2016
(51) Int. Cl.: C08L 23/00, C08K 3/04, C08L 101/00, H01M 8/0202, H01M 8/18

(54) **RESIN COMPOSITION, METHOD FOR PRODUCING RESIN COMPOSITION, POWDERY MIXTURE, BIPOLAR PLATE FOR REDOX FLOW BATTERIES AND SEPARATOR FOR FUEL CELLS**

(30) Priority: 14.09.2015 JP 2015180706
(71) Applicant: Katanosenkaku Co., Ltd., Misato-shi, Saitama 341-0044 (JP)
(72) Inventor: KATANO, Hideomi, Misato-shi Saitama 341-0044 (JP)
(74) Representative: Gille Hrabal
(86) International application number: PCT/JP2016/076994
(87) International publication number: WO 2017/047588

(57) **Abstract**

A resin composition containing carbon nanotubes as a component (A), an olefin based polymer that satisfies the following conditions (1) to (3) as a component (B), and a thermoplastic resin as a component (C), in which the blended amount of the component (A) is from 15 to 40% by mass with respect to 100% by mass of the total amount of the components (A) to (C), and the blended amount of the component (B) is from 0.5 to 2 times the blended amount of the component (A): (1) a weight average molecular weight (Mw) of from 35,000 to 150,000, (2) a molecular weight distribution (Mw/Mn) of 3 or less, and (3) a softening point of from 80 to 130°C.

## Description

### TECHNICAL FIELD

The present invention provides a resin composition capable of being applied to a bipolar plate for redox flow batteries and a separator for fuel cells, a method for producing the resin composition, and a powdery mixture useful in preparing the resin composition.

### BACKGROUND ART

A redox flow battery can achieve electric power generation with high output power by stacking single cells, and therefore a bipolar plate disposed between the cells is demanded to have a high conductivity. Furthermore, as the pressure due to the electrolytic solution, thermal contraction due to the temperature change, and the like may be caused, the bipolar plate is demanded to have a high mechanical strength even with a thin profile and a deformability for causing no breakage thereof under certain deformation.

As the conductive material, it has been considered that rather than a metal material having a possibility of deterioration in battery characteristics due to ionization thereof with the electrolytic solution, a composite material of a conductive filler formed of a chemically stable carbon material, particularly graphite, carbon black, or the like, with a resin is preferred.

For enhancing the mechanical strength and the deformability of a cured article of a conductive resin composition containing graphite, carbon black, or the like, it is necessary to increase the ratio of the resin component added. For ensuring a high conductivity, on the other hand, it is necessary to decrease the ratio of the resin component added.

Accordingly, the excellent mechanical strength and deformability, and the high conductivity are in a trade-off relationship, and various attempts have been made for satisfying both of them.

In the case where graphite is used as the carbon material, there is a tendency that the conductivity in the planar direction can be easily achieved, but the conductivity in the thickness direction is difficult to exhibit, due to the flat plate shape thereof. Accordingly, it is insufficient for the application to a bipolar plate for redox flow batteries and a separator for fuel cells described later, which are stacked in the thickness direction. In the case where carbon black is used, it is the current situation that a high conductivity is difficult to achieve due to the smaller aspect ratio thereof than graphite. It is considered that this is because there are many connecting points in the carbon. In the case where carbon nanotubes are used, it is necessary to disperse highly carbon nanotubes in a high concentration in a resin, for providing a high conductivity. However, it is the current situation that the attempt to achieve both the high concentration and the high dispersion has not yet succeeded due to the extremely large aspect ratio of carbon nanotubes.

In a fuel cell expected to be implemented in the future new energy fields, a solid polymer fuel cell is prospective for the automobile use and the consumer use since it can be operated at a low temperature. As for the fuel cell, electric power generation at high power output can be achieved by stacking single cells.

A fuel cell separator undertakes an important role for separating the single cells, and is demanded to have capabilities that are similar to the bipolar plate for redox flow batteries, i.e., the high gas impermeability for completely separating hydrogen gas, the high conductivity for decreasing the internal resistance, the high mechanical strength, the excellent deformability, and the like.

Both a metal material and a carbon material have been studied also for the separator for fuel cells. As for the metal material, an attempt of coating a noble metal or carbon on the surface thereof due to the problem of corrosion resistance, but there are problems of the durability and the cost of the coating.

As for the use of a carbon material as a conductive agent, many materials have been studied as the separator for fuel cells, such as a molded article obtained by press molding an expanded graphite sheet, a molded article obtained by curing a carbon sintered material having been impregnated with a resin, glassy carbon obtained by baking a thermosetting resin, and a molded article obtained by mixing carbon powder and a resin and molding the mixture. However, these carbon materials are demanded to be further improved.

For example, PTL 1 proposes a bipolar plate for redox flow batteries, which is formed of a composite conductive material which contains a thermoplastic resin, a carbonaceous material selected from graphite and Ketjen black, and carbon nanotubes and is obtained by mixing these materials, in which the content of the carbonaceous material is from 20 to 150 parts by mass, and the content of the carbon nanotubes is from 1 to 10 parts by mass, per 100 parts by mass of the thermoplastic resin.

PTL 2 proposes a resin composition containing a thermoplastic resin having carbon nanotubes, and acetylene black and/or graphite added thereto. There is described that a conductive resin film formed of the resin composition has conductivity and is excellent in tensile elongation, flex resistance, and flexibility, and thus can be favorably used for an electrode of an electrolyte circulating secondary cell, e.g., a redox flow battery cell, and for coating and protecting the electrode.

PTL 3 proposes a conductive material formed of a composition obtained in such a manner that carbon nanotubes, carbon black, and synthetic graphite are mixed with propylene-olefin copolymer wax to provide a master batch, which is then mixed with an organic polymer to provide the composition.

PTL 4 proposes a separator for fuel cells obtained in such a manner that a thermoplastic resin is melt-mixed with from 0.1 to 3.5% by weight of carbon nanotubes to provide a mixture, the mixture is processed into a powder form and then mixed with a conductive material, and the mixture is press-molded under heating into a plate form.

Furthermore, PTL 5 proposes production of a conductive structure formed of a crystalline thermoplastic resin composite material containing at least a crystalline thermoplastic resin and a conductive filler, in which after mold-forming the conductive structure, the conductive structure after taking out from the metallic mold is subjected to a heat treatment at the crystal melting temperature (Tm) of the composite material or more and (Tm-20)°C or less.

### CITATION LIST

### PATENT LITERATURES

PTL 1: JP 2011-228059 A
PTL 2: JP 2013-216786 A
PTL 3: JP 2012-507587 A
PTL 4: JP 2009-231034 A
PTL 5: JP 2012-051375 A

### SUMMARY OF INVENTION

### TECHNICAL PROBLEM

However, the conductivity in the thickness direction is insufficient in all PTLs 1 to 5.

For exhibiting a high conductivity by adding a carbon material to a resin, it is necessary to connect a large amount of the carbon material efficiently. Specifically, it is demanded that the carbon material is highly dispersed in the resin in a high concentration. Therefore, various carbon materials, such as carbon black, graphite, carbon nanotubes, and carbon fibers, and various resin materials are used solely or in the form of a composite.

The carbon materials have a linear or planar shape, and thus are oriented in the resin composition, and therefore the difference in volume resistivity between the planar direction and the thickness direction is unavoidable. In general, there is a tendency that the volume resistivity in the thickness direction is larger. However, a bipolar plate for redox flow batteries and a separator for fuel cells, which are stacked in the thickness direction, are demanded to have a smaller volume resistivity in the thickness direction.

Among the carbon materials, carbon nanotubes are well known to have a possibility of exhibiting a high conductivity due to the thin shape thereof with a high aspect ratio. However, it is difficult that carbon nanotubes are highly dispersed in a resin in a high concentration, and it is considerably difficult to achieve a high conductivity with a volume resistivity in the thickness direction of 100 Ω·cm or less for the resin composition that is hard to crack and capable of being subjected to injection molding or sheet molding.

Among the various attempts and inventions, there has been a pressed sheet or the like obtained by powder-mixing a small amount of a resin with carbon nanotubes and melt-kneading the mixture under pressing, so as to provide a volume resistivity in the thickness direction of 100 Ω·cm or less, but the pressed sheet or the like tends to crack. Furthermore, since a bipolar plate for redox flow batteries and a separator for fuel cells are demanded to achieve low cost and high workability, the pressed sheet or the like has room for improvement in these points.

A problem to be solved by the present invention is to provide a resin composition that has a higher conductivity in the thickness direction and is capable of providing a cured article excellent in mechanical strength and deformability, a method for producing the resin composition, a powdery mixture useful for the resin composition, and a bipolar plate for redox flow batteries and a separator for fuel cells which are formed of the resin composition.

### SOLUTION TO PROBLEM

As a result of earnest investigations made by the present inventors, it has been found that the problem can be solved by using carbon nanotubes along with an olefin based polymer having particular property values (which may be hereinafter referred simply to as an "olefin based polymer").

The present invention has been completed based on the knowledge.

The present invention provides the following items [1] to [9].
[1] A resin composition containing carbon nanotubes as a component (A), an olefin based polymer that satisfies the following conditions (1) to (3) as a component (B), and a thermoplastic resin as a component (C),
   in which a blended amount of the component (A) is from 15 to 40% by mass with respect to 100% by mass of the total amount of the components (A) to (C), and a blended amount of the component (B) is from 0.5 to 2 times the blended amount of the component (A):
   (1) a weight average molecular weight (Mw) of from 35,000 to 150,000,
   (2) a molecular weight distribution (Mw/Mn) of 3 or less, and
   (3) a softening point of from 80 to 130°C.
[2] A resin composition containing carbon nanotubes as a component (A), an olefin based polymer that satisfies the following conditions (1) to (3) as a component (B), a thermoplastic resin as a component (C), and a non-conductive inorganic filler as a component (D),
   in which a blended amount of the component (A) is from 5 to 35% by mass with respect to 100% by mass of the total amount of the components (A) to (D), a blended amount of the component (B) is from 0.5 to 2 times the blended amount of the component (A), and a blended amount of the component (D) is from 6 to 40% by mass with respect to 100% by mass of the total amount of the components (A) to (D):
   (1) a weight average molecular weight (Mw) of from 35,000 to 150,000,
   (2) a molecular weight distribution (Mw/Mn) of 3 or less, and
   (3) a softening point of from 80 to 130°C.
[3] The resin composition according to the item [1] or [2], wherein the component (C) is at least one selected from a polypropylene based resin, a polymethylpentene based resin, a syndiotactic polystyrene resin, a polyacetal resin, a polyamide resin, a polyphenylene sulfide resin, and a polybutylene terephthalate resin.
[4] A method for producing the resin composition according to item [1] or [3], including: agitating the component (A) and the component (B) at a temperature of 90°C or more and an agitation speed of 300 rpm or more to provide a mixture; and adding the mixture to the component (C) to provide a resin composition.
[5] A method for producing the resin composition according to item [2] or [3], including: agitating the component (A) and the component (B) at a temperature of 90°C or more and an agitation speed of 300 rpm or more to provide a mixture; and adding the mixture to the component (C) and the component (D) to provide a resin composition.
[6] A powdery mixture containing carbon nanotubes as a component (A) and an olefin based polymer that satisfies the following conditions (1) to (3) as a component (B),
   in which a blended amount of the component (A) is 30% by mass or more and less than 70% by mass with respect to 100% by mass of the total amount of the component (A) and the component (B):
   (1) a weight average molecular weight (Mw) of from 35,000 to 150,000,
   (2) a molecular weight distribution (Mw/Mn) of 3 or less, and
   (3) a softening point of from 80 to 130°C.
[7] A molded article, which is formed of the resin composition according to any one of the items [1] to [3] or a resin composition containing the powdery mixture according to the item [6].
[8] A bipolar plate for redox flow batteries, which is formed of the resin composition according to any one of the items [1] to [3] or a resin composition containing the powdery mixture according to the item [6].
[9] A separator for fuel cells, which is formed of the resin composition according to any one of the items [1] to [3] or a resin composition containing the powdery mixture according to the item [6].

### ADVANTAGEOUS EFFECTS OF INVENTION

According to the present invention, a resin composition that has a higher conductivity in the thickness direction and is capable of providing a cured article excellent in mechanical strength and deformability, a method for producing the resin composition, and a bipolar plate for redox flow batteries and a separator for fuel cells formed of the resin composition can be provided. Furthermore, a powdery mixture that is used in the resin composition, contains an extremely small amount of fine powder, and is excellent in handleability can also be provided.

### DESCRIPTION OF EMBODIMENTS

Embodiments of the present invention will be described below. In the description herein, the term "from A to B" relating to the descriptions of numerals means "A or more and B or less" (for the case of A < B) or "A or less and B or more" (for the case of A > B). In the present invention, a combination of preferred embodiments is a more preferred embodiment.

### <Resin Composition>

A first embodiment of the resin composition of the present invention contains carbon nanotubes as a component (A), an olefin based polymer that satisfies the following conditions (1) to (3) as a component (B), and a thermoplastic resin as a component (C), in which the blended amount of the component (A) is from 15 to 40% by mass with respect to 100% by mass of the total amount of the components (A) to (C), and the blended amount of the component (B) is from 0.5 to 2 times the blended amount of the component (A):
(1) a weight average molecular weight (Mw) of from 35,000 to 150,000,
(2) a molecular weight distribution (Mw/Mn) of 3 or less, and
(3) a softening point of from 80 to 130°C.

Many embodiments have been found, in which a small amount of carbon nanotubes are added as an auxiliary material for improving the conductivity and the strength characteristics of graphite or carbon black. Apart from them, as a result of earnest investigations made by the present inventors, it has been found that carbon nanotubes can be highly dispersed in a resin in a high concentration, and the conductivity in the thickness direction can be exhibited only with carbon nanotubes without depending on other carbon materials.

In the first embodiment, three components, i.e., the component (A), the component (B), and the component (C), are contained. The blending ratios of the component (A), the component (B), and the component (C) influence the conductivity, the mechanical strength, the deformability, and the moldability, and thus the blended amounts of the three components are controlled to balance the properties.

The blended amount of the component (A) is from 15 to 40% by mass, preferably from 15 to 35% by mass, and more preferably from 15 to 30% by mass, with respect to 100% by mass of the total amount of the components (A) to (C). When the blended amount of the component (A) is less than 15% by mass, there is a possibility that the conductivity is decreased. When the blended amount exceeds 40% by mass, the conductivity is increased, but the blended amount of the component (C) is decreased to provide a possibility that the viscosity of the resin on melting is increased, and the resin composition tends to crack.

The blended amount of the component (B) is from 0.5 to 2 times, preferably from 0.7 to 1.8 times, and more preferably from 1.0 to 1.8 times, the blended amount of the component (A). When the blended amount is less than 0.5 time, there is a possibility that the dispersibility of the component (A) is deteriorated to decrease the conductivity. When the blended amount exceeds 2 times, there is a tendency that the molded article becomes soft, and may not be suitable for a bipolar plate for redox flow batteries and a separator for fuel cells.

The blended amount of the component (C) is the balance obtained by subtracting the blended amounts of the component (A) and the component (B) from the total amount of the components (A) to (C) as 100% by mass. Accordingly, when the blended amount of the component (A) is increased, the blended amount of the component (C) becomes relatively small.

The blended amount of the component (C) is preferably from 20 to 75% by mass, more preferably from 30 to 70% by mass, and further preferably from 35 to 65% by mass, with respect to 100% by mass of the total amount of the components (A) to (C).

### [Carbon Nanotubes as Component (A)]

The carbon nanotubes as the component (A) used in the present invention are a cylindrical hollow fibrous substance formed of carbon, and the structure thereof may be a single layer structure or a multilayer structure, and is preferably a multilayer structure from the standpoint of the easiness of dispersion.

The carbon nanotubes as the component (A) used may be any of commercially available products, and those having an average diameter (average thickness) of approximately from 5 to 20 nm and an average length of approximately from 0.5 to 50 µm can be easily used and are preferred. When the average diameter is 5 nm or more, the carbon nanotubes are hard to break on kneading, and when the average diameter is 20 nm or less, the conductivity can be increased. When the average length is 0.5 µm or more, the conductivity can be increased, and when the average length is 50 µm or less, the increase of viscosity on kneading can be prevented to facilitate the kneading and molding. In this point of view, the average diameter of the carbon nanotubes is more preferably from 6 to 20 nm, and further preferably from 7 to 20 nm, and the average length thereof is more preferably from 0.5 to 30 µm, and further preferably from 0.6 to 15 µm.

The average diameter and the average length can be obtained by observing the carbon nanotubes with an electron microscope (such as SEM or TEM), and averaging the observed values.

The carbon nanotubes as the component (A) may be produced by an arc discharge method, a chemical vapor deposition method (CVD method), a laser ablation method, or the like.

The carbon nanotubes as the component (A) used may be known carbon nanotubes. Examples of the commercially available product thereof include multilayer carbon nanotubes, such as "Flo Tube 9000", produced by C-Nano Technology, Ltd., "C-100", produced by Arkema S.A., and "NC 7000", produced by Nanocyl S.A. These satisfy the aforementioned average diameter and average length, and can be preferably used. These are also excellent from the standpoint of the mass production and the price competitiveness.

### [Olefin based Polymer as Component (B)]

The olefin based polymer as the component (B) used in the present invention satisfies the following conditions (1) to (3):
(1) a weight average molecular weight (Mw) of from 35,000 to 150,000,
(2) a molecular weight distribution (Mw/Mn) of 3 or less, and
(3) a softening point of from 80 to 130°C.

The olefin based polymer as the component (B) is preferably an olefin based polymer obtained by polymerizing one or more monomer selected from ethylene and an α-olefin having from 3 to 28 carbon atoms.

Examples of the α-olefin having from 3 to 28 carbon atoms include propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Among these, the α-olefin is preferably an α-olefin having from 3 to 24 carbon atoms, more preferably an α-olefin having from 3 to 12 carbon atoms, further preferably an α-olefin having from 3 to 6 carbon atoms, particularly preferably an α-olefin having from 3 to 4 carbon atoms, and most preferably propylene.

The olefin based polymer as the component (B) used may be an olefin based homopolymer obtained by polymerizing one kind among these solely, or an olefin based copolymer obtained by copolymerizing two or more kinds thereof.

In the description herein, the term "olefin polymer" simply referred includes both the olefin homopolymer and the olefin copolymer.

Examples of the olefin based polymer as the component (B) include an ethylene based polymer, in which 50% by mol or more of the monomers constituting the polymer is ethylene monomer, a propylene based polymer (1), in which 50% by mol or more of the monomers constituting the polymer is propylene monomer, and a butene based polymer, in which 50% by mol or more of the monomers constituting the polymer is butene monomer. The propylene based polymer (1) is preferred from the standpoint of the heat resistance and the mechanical strength.

The propylene based polymer (1) is preferably a propylene based polymer selected from a propylene homopolymer, a propylene-ethylene block copolymer, a propylene-butene block copolymer, a propylene-α-olefin block copolymer, a propylene-ethylene random copolymer, a propylene-butene random copolymer, a propylene-α-olefin random copolymer, a propylene-α-olefin graft copolymer, and the like, and particularly preferably a propylene homopolymer from the standpoint of the mechanical strength.

The propylene based polymer (1) preferably has a content of a constitutional unit derived from an α-olefin having 3 carbon atoms (i.e., propylene monomer) of 50% by mol or more, more preferably 65% by mol or more, further preferably 75% by mol or more, and still further preferably 80% by mol or more, based on the monomers constituting the polymer.

The olefin based polymer as the component (B) used may be a propylene based polymer (2) that satisfies at least one of the following conditions (i) and (ii).
(i) A constitutional unit derived from ethylene is contained in an amount of more than 0% by mol and 25% by mol or less.
(ii) A constitutional unit derived from 1-butene is contained in an amount of more than 0% by mol and 30% by mol or less.

In the case where the propylene based polymer (2) is a copolymer containing an olefin having 2 carbon atoms (i.e., ethylene monomer), the content of the constitutional unit derived from an olefin having 2 carbon atoms is preferably more than 0% by mol and 25% by mol or less, more preferably more than 0% by mol and 23% by mol or less, further preferably more than 0% by mol and 20% by mol or less, and still further preferably more than 0% by mol and 18% by mol or less, based on the monomers constituting the polymer. In the case where the propylene polymer (2) is a copolymer containing an α-olefin having 4 or more carbon atoms (i.e., 1-butene monomer), the content of the constitutional unit derived from 1-butene is preferably more than 0% by mol and 30% by mol or less, more preferably more than 0% by mol and 27% by mol or less, and further preferably more than 0% by mol and 20% by mol or less.

The olefin based polymer as the component (B) has a weight average molecular weight (Mw) of from 35,000 to 150,000, a molecular weight distribution (Mw/Mn) of 3 or less, and a softening point of from 80 to 130°C. A polymer referred to as so-called wax, such as a propylene based polymer and an ethylene based polymer each having a weight average molecular weight (Mw) of less than 35,000, affects the physical properties of the obtained product due to the heat resistance and the bleed out, and is restricted in use. A resin having a weight average molecular weight (Mw) exceeding 150,000 makes the dispersion treatment of the component (A) difficult. In this point of view, the weight average molecular weight (Mw) is preferably from 40,000 to 140,000, and more preferably from 42,000 to 130,000.

The use of the olefin based polymer having a molecular weight distribution (Mw/Mn) of 3 or less can avoid a low molecular weight component and a high molecular weight component affecting the physical properties of the obtained product. In this point of view, the molecular weight distribution (Mw/Mn) is preferably 2.8 or less, and more preferably 2.5 or less.

The use of the olefin based polymer having a softening point restricted to from 80 to 130°C can improve the dispersibility of the component (A) and can decrease the treatment temperature. In this point of view, the softening point is preferably from 90 to 125°C, and more preferably from 93 to 120°C.

The component (B) is preferably an olefin based polymer that is synthesized with a metallocene catalyst.

In the present invention, the weight average molecular weight (Mw) and the number average molecular weight (Mn) are measured by a gel permeation chromatography (GPC) method, and the molecular weight distribution (Mw/Mn) is obtained. In the measurement, the equipment and the condition shown below are used to obtain a weight average molecular weight and a number average molecular weight in terms of polystyrene conversion. The molecular weight distribution (Mw/Mn) is a value obtained from the weight average molecular weight (Mw) and the number average molecular weight (Mn).

### [GPC Measurement Equipment]

Column: "TOSO GMHHR-H(S)HT", produced by Tosoh Corporation
Detector: RI Detector for liquid chromatography, "Waters 150C", produced by Waters Corporation

### [Measurement Condition]

Solvent: 1,2,4-trichlorobenzene
Measurement temperature: 145°C
Flow rate: 1.0 mL/min
Specimen concentration: 2.2 mg/mL
Injection amount: 160 µL
Calibration curve: Universal Calibration
Analysis program: HT-GPC (ver. 1.0)

In the present invention, the softening point can be obtained according to a ball-ring method, ISO 4625.

### [Thermoplastic Resin as Component (C)]

Examples of the thermoplastic resin as the component (C) used in the present invention include a polyimide resin, a polyacetal resin, a polyamide resin, a polyethylene terephthalate resin, a polybutylene terephthalate resin, a polycarbonate resin, a polyphenylene ether resin, a polyether sulfone resin, a polyphenylene sulfide resin, a polyphenylene sulfone resin, a polypropylene based resin, a polymethylpentene based resin, and a syndiotactic polystyrene resin.

The component (C) is appropriately selected from the aforementioned resins from the standpoint of the compatibility with the component (A) and the component (B), the heat resistance against at least 100°C or more, the chemical resistance in a redox atmosphere, and the like, and in consideration of the operation condition of the bipolar plate for redox flow batteries and the separator for fuel cells. Among these, at least one selected from the group consisting of a polypropylene based resin, a polymethylpentene based resin, a syndiotactic polystyrene resin, a polyacetal resin, a polyamide resin, a polyphenylene sulfide resin, and a polybutylene terephthalate resin is preferred. A polypropylene based polymer is excellent in price competitiveness, and a polymethylpentene based resin and a syndiotactic polystyrene resin are excellent in heat resistance.

These resins may be used solely or as a combination of two or more kinds thereof.

A second embodiment of the resin composition of the present invention contains carbon nanotubes as a component (A), an olefin based polymer that satisfies the following conditions (1) to (3) as a component (B), a thermoplastic resin as a component (C), and a non-conductive inorganic filler as a component (D), in which the blended amount of the component (A) is from 5 to 35% by mass with respect to 100% by mass of the total amount of the components (A) to (D), the blended amount of the component (B) is from 0.5 to 2 times the blended amount of the component (A), and the blended amount of the component (D) is from 6 to 40% by mass with respect to 100% by mass of the total amount of the components (A) to (D):
(1) a weight average molecular weight (Mw) of from 35,000 to 150,000,
(2) a molecular weight distribution (Mw/Mn) of 3 or less, and
(3) a softening point of from 80 to 130°C.

In the second embodiment, four components, i.e., the component (A), the component (B), the component (C), and the component (D), are contained. The present inventors have found that by blending the non-conductive inorganic filler as the component (D) in the resin composition, the conductivity in the thickness direction can be exhibited even though the blended amount of the carbon nanotubes as the component (A) is decreased.

The blending ratios of the component (A), the component (B), the component (C), and the component (D) influence the conductivity, the mechanical strength, the deformability, and the moldability, and thus the blended amounts of the four components are controlled to balance the properties.

The blended amount of the component (A) is from 5 to 35% by mass, preferably from 5 to 33% by mass, and more preferably from 5 to 30% by mass, with respect to 100% by mass of the total amount of the components (A) to (D). When the blended amount of the component (A) is less than 5% by mass, there is a possibility that the conductivity is decreased. When the blended amount exceeds 35% by mass, the conductivity is increased, but the blended amount of the component (C) is decreased to provide a possibility that the viscosity of the resin on melting is increased, and the resin composition tends to crack.

The blended amount of the component (B) is from 0.5 to 2 times, preferably from 0.7 to 1.8 times, and more preferably from 1.0 to 1.8 times, the blended amount of the component (A). When the blended amount is less than 0.5 time, there is a possibility that the dispersibility of the component (A) is deteriorated to decrease the conductivity. When the blended amount exceeds 2 times, there is a tendency that the molded article becomes soft, and may not be suitable for a bipolar plate for redox flow batteries and a separator for fuel cells.

The blended amount of the component (D) is from 6 to 40% by mass, preferably from 8 to 35% by mass, and more preferably from 10 to 30% by mass, with respect to 100% by mass of the total amount of the components (A) to (D). When the blended amount is less than 6% by mass, there is a possibility that the conductivity is decreased, and when the blended amount exceeds 40% by mass, there is a tendency that the deformability is decreased.

The blended amount of the component (C) is the balance obtained by subtracting the blended amounts of the component (A), the component (B), and the component (D) from the total amount of the components (A) to (D) as 100% by mass.

The blended amount of the component (C) is preferably from 20 to 75% by mass, more preferably from 25 to 70% by mass, and further preferably from 30 to 68% by mass, with respect to 100% by mass of the total amount of the components (A) to (D).

The component (A), the component (B), and the component (C) are as described for the first embodiment.

### [Non-conductive Inorganic Filler as Component (D)]

Examples of the non-conductive inorganic filler as the component (D) used in the present invention include calcium carbonate, precipitated barium sulfate, talc, diatom earth, mica, glass flakes, alumina, magnesium carbonate, and calcium sulfate. Among these, calcium carbonate, precipitated barium sulfate, and talc are preferably used since these have an established technique for adding to a resin, and have price competitiveness.

The non-conductive inorganic filler may be one subjected to a surface treatment for the purpose of enhancing the dispersibility in a resin.

These materials may be used solely or as a combination of two or more kinds thereof.

The component (D) preferably has an average particle diameter of from 0.3 to 50 µm, more preferably from 0.5 to 20 µm, and further preferably from 0.5 to 10 µm, from the standpoint of the easiness of addition.

In the present invention, the average particle diameter means a 50% average particle diameter, and can be obtained, for example, with Microtrac Particle Size Analyzer (dynamic light scattering method), produced by Nikkiso Co., Ltd.

It is considered that in the process of solidifying the resin component constituted by the component (B) and the component (C), the component (D) suppresses agglomeration of the component (A) through the gathering of the component (A) on the surface of the component (D), so as to provide an effect of efficiently performing electric connection among the carbon nanotubes as the component (A). Accordingly, by blending the component (D) in the resin composition, the conductivity in the thickness direction can be increased even though the blended amount of the component (A) is decreased.

### [Additional Components]

In the resin composition of the present invention, additives that are generally blended in a composition of this type, such as a lubricant, an antistatic agent, an ultraviolet ray absorbent, a pigment, and an organic filler, may be blended depending on necessity.

### <Method for producing Resin Composition>

A method for producing the resin composition will be described.

A first embodiment of the method for producing the resin composition of the present invention includes: agitating the component (A) and the component (B) at a temperature of 90°C or more and an agitation speed of 300 rpm or more to provide a mixture; and adding the mixture to the component (C) to provide a resin composition.

A second embodiment of the method for producing the resin composition of the present invention includes: agitating the component (A) and the component (B) at a temperature of 90°C or more and an agitation speed of 300 rpm or more to provide a mixture; and adding the mixture to the component (C) and the component (D) to provide a resin composition.

In the method for producing the resin composition according to the first embodiment and the second embodiment, the component (A) and the component (B) are agitated at a temperature of 90°C or more and an agitation speed of 300 rpm or more to provide a mixture.

The component (A) and the component (B) used may be those described in the aforementioned section <Resin Composition>.

The component (A) and the component (B) are placed in a mixer, and agitated and mixed at a temperature, at which the component (B) is softened, or more, i.e., 90°C or more and a high speed of an agitation speed of 300 rpm or more, whereby the component (A) is loosened, and the component (B) is attached to the surface of the component (A). The attachment of the component (B) to the surface of the component (A) may be a factor facilitating the mixing of the component (A) to the component (C) on melt-kneading with the component (C), and the component (A) can be highly dispersed in the component (C) in a high concentration.

The agitation temperature is preferably from 100 to 180°C, more and more preferably from 120 to 160°C, and the agitation speed is preferably from 400 to 3,000 rpm, and more preferably from 500 to 2,500 rpm. The agitation time is not particularly limited, as far as the component (A) and the component (B) are sufficiently agitated and mixed, and is preferably from 5 minutes to 24 hours, and more preferably from 10 minutes to 12 hours.

Examples of the mixer used for the agitation and mixing include known high speed mixers, such as a dissolver, a butterfly mixer, a paddle blade mixer, a Henschel mixer, a Super Mixer, a Banbury mixer, a kneader, and a Tri-Mix. Specific examples thereof include FM Mixer, produced by Nippon Coke & Engineering. Co., Ltd., and Super Mixer, produced by Kawata MFG Co., Ltd.

As for the mixing method, the entire amount of the component (A) and the entire amount of the component (B) may be mixed in one shot, or may be mixed by a multistage method, such as a method of mixing the entire amount of the component (A) and a part of the component (B), and then further adding and mixing the balance of the component (B), and a method of mixing a part of the component (A) and the entire amount of the component (B), and then further adding and mixing the balance of the component (A).

A powdery mixture containing the component (A) and the component (B) coated on the surface of the component (A) can be obtained through the aforementioned reaction.

Subsequently, in the first embodiment, the resulting mixture (powdery mixture) is added to and mixed with the component (C). In the second embodiment, the resulting mixture (powdery mixture) is added to and mixed with the component (C) and the component (D). The component (C) and the component (D) used may be those described in the aforementioned section <Resin Composition>.

The mixture (powdery mixture), and the component (C) or the component (C) and the component (D) are mixed with a mixer, such as a dissolver, a butterfly mixer, a paddle blade mixer, a Henschel mixer, and a Super Mixer. Specifically, Nauta Mixer, produced by Hosokawa Micron Corporation, V-type Mixer and Ribbon Mixer, produced by Nishimura Machine Works, Co., Ltd., and the like may be used. For a small amount, the components may be placed in a suitable polyethylene bag along with air, and mixed by shaking the bag vertically and horizontally.

The resin composition can be obtained by molding the mixture of the mixture (powdery mixture) and the component (C) or the component (C) and the component (D) by a general method, for example, the mixture is melt-kneaded with a single screw or twin screw extruder and extruded into a strand form, which is granulated into pellets, or extruded into a sheet form. The heating temperature in the melt-kneading is preferably from 150 to 600°C, and more preferably from 200 to 500°C.

According to the aforementioned production method, the carbon nanotubes as the component (A) can be highly dispersed in the resin in a high concentration, and therefore a resin composition can be obtained that has a higher conductivity in the thickness direction and is capable of providing a cured article excellent in mechanical strength and deformability. The aforementioned production methods are simple methods excellent in cost saving.

The resin composition obtained by the production method preferably has a melt flow rate (MFR) of from 1.0 to 100 g/10 min, and more preferably from 1.0 to 50 g/10 min.

The cured product of the resin composition preferably has a volume resistivity in the thickness direction of 100 Ω·cm or less, and more preferably 95 Ω·cm or less.

The cured product of the resin composition preferably has a flexural modulus of 700 MPa or more, more preferably 800 MPa or more, and further preferably 900 MPa or more.

The cured product of the resin composition preferably has a flexural deformation at yield of 2.0% or more, and more preferably 4.0% or more.

Furthermore, the cured product of the resin composition preferably has an Izod impact strength (IZOD) of 1.0 kJ/m² or more, more preferably 1.5 kJ/m² or more, and further preferably 1.9 kJ/m² or more.

The aforementioned property values can be measured specifically by the methods described for the examples.

### <Powdery Mixture>

The powdery mixture of the present invention contains carbon nanotubes as a component (A) and an olefin based polymer that satisfies the following conditions (1) to (3) as a component (B), in which the blended amount of the component (A) is 30% by mass or more and less than 70% by mass based on the total amount of the component (A) and the component (B) as 100% by mass:
(1) a weight average molecular weight (Mw) of from 35,000 to 150,000,
(2) a molecular weight distribution (Mw/Mn) of 3 or less, and
(3) a softening point of from 80 to 130°C.

The powdery mixture of the present invention contains the component (A), and the component (B) coated on the surface of the component (A). Therefore, the powdery mixture has a particle diameter larger than the carbon nanotubes as the component (A) and contains an extremely small amount of fine powder of 1 µm or less, so as to be excellent in handleability.

Furthermore, the powdery mixture of the present invention enables the carbon nanotubes as the component (A) to be blended uniformly in the thermoplastic resin as the component (C) in a high concentration. Therefore, a resin composition containing the powdery mixture has a higher conductivity in the thickness direction and is capable of providing a cured article excellent in mechanical strength and deformability.

The blended amount of the component (A) is 30% by mass or more and less than 70% by mass, preferably from 32 to 60% by mass, and more preferably from 35 to 50% by mass, based on the total amount of the component (A) and the component (B) as 100% by mass. When the blended mount of the component (A) is less than 30% by mass, there is a possibility that the conductivity is decreased. When the blended amount is 70% by mass or more, there is a possibility that non-uniform dispersion occurs.

The component (A) and the component (B) used may be those described in the aforementioned section <Resin Composition>.

### <Molded Article, Bipolar Plate for Redox Flow Batteries, and Separator for Fuel Cells>

The molded article, the bipolar plate for redox flow batteries, and the separator for fuel cells of the present invention each is formed of the resin composition or a resin composition containing the powdery mixture. The molding method is not particularly limited, and various molding methods that are generally applied to a thermoplastic resin may be used. Examples thereof include an injection molding method, an extrusion molding method, a calender molding method, and a press molding method.

### EXAMPLES

The present invention will be specifically described with reference to Examples and Comparative Examples below. Examples shown below are provided only for describing the present invention in detail, and the present invention is not limited to Examples shown below unless the substance thereof is impaired.

### [Production of Specimen for Flexure Test and Izod Impact Test]

Specimens for the flexure test and the Izod impact test were prepared by using an injection molding machine ("IS80EPN-2A", produced by Toshiba Machine Co., Ltd.) and a mold for test piece according to JIS K6911 (mold clamping force: 80 t). The cylinder set temperatures on molding are shown in Tables 1 to 3. For a specimen formed by heat press, a specimen was prepared by punching.

### [Evaluation of Physical Properties]

### (1) Measurement of Volume Resistivity in Thickness Direction

In the preparation of specimens by injection molding, a plate having a size of 13 mm in height × 180 mm in width with a thickness of approximately 3 mm was prepared with an injection molding machine. A measurement piece for the volume resistivity in the thickness direction having a size of 13 mm in height × 10 mm in width was cut out from the center portion of the plate thus produced, and a conductive paste ("Dotite D-550", produced by Fujikura Kasei Co., Ltd.) was coated on the upper and lower surfaces thereof. After drying, the measurement piece was clamped from the upper and lower surfaces with copper plates, and the resistance was measured by applying 10 V to the upper and lower copper plates by the resistance measurement function of a resistivity meter ("Loresta Model GPMCP-T610", produced by Mitsubishi Chemical Analytech Co., Ltd.). The resistance value was converted with the area and the thickness to calculate the volume resistivity.

In the preparation of specimens by press molding, a specimen in the form of a sheet having a size of 40 mm in height × 40 mm in width with a thickness of approximately 1.1 mm was formed with a twin screw extruder and then pressed to control the thickness to approximately 1 mm. A measurement piece having a size of 13 mm in height × 10 mm in width was cut out from the center portion of the press molded plate thus prepared, and a conductive paste ("Dotite D-550", produced by Fujikura Kasei Co., Ltd.) was coated on the upper and lower surfaces thereof. After drying, the measurement piece was clamped from the upper and lower surfaces with copper plates, and the resistance was measured by applying 10 V to the upper and lower copper plates by the resistance measurement function of a resistivity meter ("Loresta Model GPMCP-T610", produced by Mitsubishi Chemical Analytech Co., Ltd.). The resistance value was converted with the area and the thickness to calculate the volume resistivity.

For evaluating the validity of the measurement method for the volume resistivity, the conductive paste was coated on the upper and lower surfaces a copper plate having a size of 13 mm in height × 10 mm in width with a thickness of approximately 0.5 mm, and the resistance was measured, in the same manner as above. The resistance value was 5% or less of the smallest resistance value of the present invention. Therefore, it was confirmed that the contact resistances between the conductive paste and the copper plate and between the copper plate and the probe of the resistance meter were small enough to be ignored, and thus the validity of the measurement method was confirmed.

### (2) Melt Flow Rate (MFR)

The melt flow rate was measured with a melt indexer ("Model P-01", produced by Toyo Seiki Seisaku-sho, Ltd.) according to JIS K7210. The measurement temperatures and the loads are shown in Tables 2 and 3.

### (3) Flexure Test

The flexural modulus, the flexural stress at yield, and the flexural deformation at yield were measured with a precision universal tester ("Model AGS-500A", produced by Shimadzu Corporation) according to JIS K7203.

### (4) Izod Impact Strength (IZOD)

The Izod impact strength was measured with a universal pendulum impact tester ("Model 6545/000", produced by CEAST according to JIS K7111-1.

The details of the components shown in Tables 1 to 3 used in Examples and Comparative Examples are as follows.

### [Carbon Nanotubes as Component (A)]

(A-1): "NC7000", produced by Nanocyl S.A. (average diameter: 9.5 nm, average length: 1.5 µm)
(A-2): "C-100", produced by Arkema S.A. (average diameter: 13 nm, average length: 4 µm)

### [Olefin based Polymer as Component (B)]

(B-1): "L-MODU S400", produced by Idemitsu Kosan Co., Ltd. (low stereoregular polyolefin, Mw = 45,000, (Mw/Mn) = 2, softening point: 93°C)
(B-2): "L-MODU S901", produced by Idemitsu Kosan Co., Ltd. (low stereoregular polyolefin, Mw = 130,000, (Mw/Mn) = 2, softening point: 120°C)

### [Thermoplastic Resin as Component (C)]

(C-1): "Prime Polypro J105G", produced by Prime Polymer Co., Ltd. (polypropylene)
(C-2): "Prime Polypro J707G", produced by Prime Polymer Co., Ltd. (polypropylene)
(C-3): "TPX RT18", produced by Mitsui Chemicals, Inc. (polymethylpentene)
(C-4): "Xarec S105", produced by Idemitsu Kosan Co., Ltd. (syndiotactic polystyrene)

### [Non-conductive Inorganic Filler as Component (D)]

(D-1): "KS-800", produced by Calfine Co., Ltd. (heavy calcium carbonate)
(D-2): "MICRO ACE P-3", produced by Nippon Talc Co., Ltd. (talc)
(D-3): "Bariace B-54", produced by Sakai Chemical Industry Co., Ltd. (precipitated barium sulfate)

### (Example 1)

### (Production of Powdery Mixture)

The component (A) and the component (B) were placed in an FM mixer, produced by Nippon Coke & Engineering. Co., Ltd. ("FM10C/I", capacity: 9 L) in the blended amounts shown in Table 1, and agitated and mixed under condition of an agitation temperature of 140°C, an agitation time of 60 minutes, and an agitation rotation number of 1,000 rpm, so as to provide a powdery mixture.

The bulk densities of the carbon nanotubes "NC7000" (A-1) and the resulting powder mixture were measured according to JIS K5101, and were 0.07 g/mL for (A-1) and 0.40 g/mL for the powdery mixture.

The resulting powdery mixture was melt-kneaded with a twin screw extruder ("TEM-35B", produced by Toshiba Machine Co., Ltd.) (screw diameter: 35 mm, L/D: 32, bent type) at an agitation rotation number of 100 rpm and a kneading temperature of 300°C, a die having a sheet forming slit having a length of 40 mm and a width of 1.1 mm was attached to the outlet port of the twin screw extruder, and the kneaded material was taken out onto a metal mesh and the air-cooled to provide a sheet. The evaluated physical properties of the resulting sheet are shown in Table 1.

**Table 1**

| | | | Unit | Example 1 |
|---|---|---|---|---|
| Resin composition | Component (A) | (A-1) | % by mass | 40 |
| | Component (B) | (B-1) | % by mass | 60 |
| | Total | | % by mass | 100 |
| Kneading temperature | | | °C | 300 |
| Kneading | | | - | possible |
| Taking out method from twin screw extruder | | | - | sheet form |
| Molding method | | | - | press |
| Molding temperature | | | °C | 280 |
| Physical properties | Volume resistivity in thickness direction | | Ω·cm | 2.7 × 10⁻¹ |
| | Flexural modulus | | MPa | 1,700 |
| | Flexural stress at yield | | MPa | 21 |
| | Flexural deformation at yield | | % | 0.6 |
| | Izod impact strength | | kJ/m² | 0.4 |

As shown in Table 1, Example 1, in which the resin composition contained the component (A) in an amount of 40% by mass and was taken out in the form of a sheet from the twin screw extruder, and the specimen was molded by pressing, provided an extremely high conductivity with a volume resistivity in the thickness direction of 2.7 × 10⁻¹ Ω·cm.

### (Examples 2 to 5 and Comparative Examples 1 to 3)

### [Production of Resin Composition of First Embodiment]

The component (A) and the component (B) in the blended amounts thereof shown in Table 2 were placed in an FM mixer, produced by Nippon Coke & Engineering. Co., Ltd. ("FM10C/I", capacity: 9 L), and agitated and mixed under condition of an agitation temperature of 140°C, an agitation time of 60 minutes, and an agitation rotation number of 1,000 rpm, so as to provide a powdery mixture.

Thereafter, the resulting powdery mixture and the component (C) in the blended amount shown in Table 2 were dry-blended, and then melt-kneaded with a twin screw extruder ("TEM-35B", produced by Toshiba Machine Co., Ltd.) (screw diameter: 35 mm, L/D: 32, bent type) at an agitation rotation number of 100 rpm and the kneading temperature shown in Table 2. A die having a strand forming port having a diameter of 3 mm was attached to the outlet port of the twin screw extruder, and the kneaded material was extruded through the die into a water tank for cooling, and then formed into pellets with a strand cutter. The evaluated physical properties of the resulting pellets are shown in Table 2. In Table 2, the blank cell means not blended.

**Table 2 (1/2)**

| | | | | Example | | | |
|---|---|---|---|---|---|---|---|
| | | | Unit | 2 | 3 | 4 | 5 |
| Resin composition | Component (A) | (A-1) | % by mass | 15 | 24 | 24 | 20 |
| | Component (B) | (B-1) | % by mass | 22.5 | 36 | | 30 |
| | | (B-2) | % by mass | | | 36 | |
| | Component (C) | (C-1) | % by mass | 62.5 | 40 | 40 | |
| | | (C-2) | % by mass | | | | |
| | | (C-4) | % by mass | | | | 50 |
| | Total | | % by mass | 100 | 100 | 100 | 100 |
| | Component (B) / Component (A) | | - | 1.5 | 1.5 | 1.5 | 1.5 |
| Kneading temperature | | | °C | 240 | 240 | 240 | 320 |
| Kneading | | | - | possible | possible | possible | possible |
| Taking out method from twin screw extruder | | | - | strand | strand | strand | strand |
| Molding method | | | - | injection | injection | injection | injection |
| Molding temperature | | | °C | 230 | 280 | 280 | 290 |
| Physical properties | Volume resistivity in thickness direction | | Ω·cm | 65 | 1.2 | 1.6 | 16 |
| | MFR measurement temperature | | °C | 320 | 320 | 320 | 320 |
| | MFR measurement load | | kg | 2.16 | 21.6 | 21.6 | 21.6 |
| | MFR | | g/10 min | 5.2 | 3.4 | 1.7 | 13 |
| | Flexural modulus | | MPa | 1,700 | 1,200 | 1,500 | 1,200 |
| | Flexural stress at yield | | MPa | 33 | 21 | 25 | 18 |
| | Flexural deformation at yield | | % | 5.0 | 5.5 | 5.1 | 2.0 |
| | Izod impact strength | | kJ/m² | 4.4 | 2.7 | 3.2 | 1.3 |

**Table 2 (2/2)**

| | | | | Comparative Example | | |
|---|---|---|---|---|---|---|
| | | | Unit | 1 | 2 | 3 |
| Resin composition | Component (A) | (A-1) | % by mass | 5 | 5 | 15 |
| | Component (B) | (B-1) | % by mass | 7.5 | 7.5 | 5 |
| | | (B-2) | % by mass | | | |
| | Component (C) | (C-1) | % by mass | 87.5 | | 80 |
| | | (C-2) | % by mass | | 87.5 | |
| | | (C-4) | % by mass | | | |
| | Total | | % by mass | 100 | 100 | 100 |
| | Component (B) / Component (A) | | - | 1.5 | 1.5 | 0.33 |
| Kneading temperature | | | °C | 240 | 240 | 240 |
| Kneading | | | - | possible | possible | possible |
| Taking out method from twin screw extruder | | | - | strand | strand | strand |
| Molding method | | | - | injection | injection | injection |
| Molding temperature | | | °C | 230 | 230 | 230 |
| Physical properties | Volume resistivity in thickness direction | | Ω·cm | 3.3 × 103 | 2.5 × 10⁴ | 2.2 × 10³ |
| | MFR measurement temperature | | °C | 320 | 320 | 320 |
| | MFR measurement load | | kg | 2.16 | 2.16 | 2.16 |
| | MFR | | g/10 min | 36 | 23 | 4.8 |
| | Flexural modulus | | MPa | 1,200 | 1,400 | 1,500 |
| | Flexural stress at yield | | MPa | 27 | 30 | 28 |
| | Flexural deformation at yield | | % | 5.2 | 5.3 | 4.1 |
| | Izod impact strength | | kJ/m² | 3.5 | 1.9 | 4.1 |

As shown in Table 2, Examples 2 to 5 containing the three components, i.e., the carbon nanotubes as the component (A), the olefin polymer as the component (B), and the thermoplastic resin as the component (C), in which the component (A) and the component (B) were blended in the particular amounts provided a high conductivity with a volume resistivity in the thickness direction of 100 Ω·cm or less. In particular, Examples 3 and 4 having a blended amount of the component (A) of 24% by mass had volume resistivities in the thickness direction of 1.2 Ω·cm and 1.6 Ω·cm respectively, providing an extremely high conductivity. Furthermore, Example 5 using a syndiotactic polystyrene resin, which was engineering plastics, as the thermoplastic resin as the component (C) also provided a high conductivity with a volume resistivity in the thickness direction of 16 Ω·cm. Thus, the development to the field of high-temperature products is expected.

On the other hand, Comparative Examples 1 and 2 having a blended amount of the component (A) of 5% by mass and Comparative Example 3 having a blended amount of the component (B) of 0.33 time the component (A) failed to provide a volume resistivity in the thickness direction of 100 Ω·cm or less.

### (Examples 6 to 14 and Comparative Examples 4 and 5)

### [Production of Resin Composition of Second Embodiment]

The component (A) and the component (B) in the blended amounts thereof shown in Table 3 were placed in an FM mixer, produced by Nippon Coke & Engineering. Co., Ltd. ("FM10C/I", capacity: 9 L), and agitated and mixed under condition of an agitation temperature of 140°C, an agitation time of 60 minutes, and an agitation rotation number of 1,000 rpm, so as to provide a powdery mixture.

Thereafter, the resulting powdery mixture, the component (C), and the component (D) in the blended amounts shown in Table 3 were dry-blended, and then melt-kneaded with a twin screw extruder ("TEM-35B", produced by Toshiba Machine Co., Ltd.) (screw diameter: 35 mm, L/D: 32, bent type) at an agitation rotation number of 100 rpm and the kneading temperature shown in Table 3. The resulting resin composition was taken out by the method shown in Table 3.

In the case where the resin composition was molded into a sheet, a die having a sheet forming slit having a length of 40 mm and a width of 1.1 mm was attached to the outlet port of the twin screw extruder, and the kneaded material was taken out from the die onto a metal mesh and the air-cooled to provide a sheet. The evaluated physical properties of the resulting sheets and pellets are shown in Table 3. In Table 3, the blank cell means not blended.

**Table 3 (1/2)**

| | | | | Example | | | | Comparative Example | |
|---|---|---|---|---|---|---|---|---|---|
| | | | Unit | 6 | 7 | 8 | 9 | 4 | 5 |
| Resin composition | Component (A) | (A-1) | % by mass | 5 | 5 | 10 | | 5 | 40 |
| | | (A-2) | % by mass | | | | 10 | | |
| | Component (B) | (B-1) | % by mass | 7.5 | 7.5 | 15 | 15 | 7.5 | 30 |
| | Component (C) | (C-1) | % by mass | | | | | | 20 |
| | | (C-2) | % by mass | 67.5 | 52.5 | 45 | 45 | 82.5 | |
| | | (C-3) | % by mass | | | | | | |
| | Component (D) | (D-1) | % by mass | | | 30 | 30 | | |
| | | (D-2) | % by mass | | | | | | |
| | | (D-3) | % by mass | 20 | 35 | | | 5 | 10 |
| | Total | | % by mass | 100 | 100 | 100 | 100 | 100 | 100 |
| | Component (B) / Component (A) | | - | 1.5 | 1.5 | 1.5 | 1.5 | 1.5 | 0.75 |
| Kneading temperature | | | °C | 240 | 240 | 240 | 240 | 240 | - |
| Kneading | | | - | possible | possible | possible | possible | possible | impossible |
| Taking out method from twin screw extruder | | | - | strand | strand | strand | strand | strand | - |
| Molding method | | | - | injection | injection | injection | injection | injection | - |
| Molding temperature | | | °C | 230 | 230 | 300 | 300 | 230 | - |
| Physical properties | Volume resistivity in thickness direction | | Ω·cm | 90 | 43 | 16 | 32 | 8.5 × 10³ | - |
| | MFR measurement temperature | | °C | 320 | 320 | 320 | 320 | 320 | - |
| | MFR measurement load | | kg | 2.16 | 2.16 | 5.0 | 5.0 | 2.16 | - |
| | MFR | | g/10 min | 29 | 9.8 | 3.3 | 4.6 | 38 | - |
| | Flexural modulus | | MPa | 1,200 | 970 | 1,400 | 1,300 | 1,100 | - |
| | Flexural stress at yield | | MPa | 25 | 20 | 22 | 24 | 25 | - |
| | Flexural deformation at yield | | % | 5.3 | 5.9 | 5.0 | 5.6 | 4.6 | - |
| | Izod impact strength | | kJ/m² | 5.7 | 5.0 | 2.7 | 3.3 | 6.0 | - |

**Table 3 (2/2)**

| | | | | Example | | | | |
|---|---|---|---|---|---|---|---|---|
| | | | Unit | 10 | 11 | 12 | 13 | 14 |
| Resin composition | Component (A) | (A-1) | % by mass | 20 | 20 | 20 | 20 | 20 |
| | | (A-2) | % by mass | | | | | |
| | Component (B) | (B-1) | % by mass | 30 | 30 | 30 | 30 | 30 |
| | Component (C) | (C-1) | % by mass | 30 | 30 | 37 | 37 | |
| | | (C-2) | % by mass | | | | | |
| | | (C-3) | % by mass | | | | | 30 |
| | Component (D) | (D-1) | % by mass | | | | 13 | |
| | | (D-2) | % by mass | | | 13 | | |
| | | (D-3) | % by mass | 20 | 20 | | | 20 |
| | Total | | % by mass | 100 | 100 | 100 | 100 | 100 |
| | Component (B)/Component (A) | | - | 1.5 | 1.5 | 1.5 | 1.5 | 1.5 |
| Kneading temperature | | | °C | 240 | 240 | 240 | 240 | 320 |
| Kneading | | | - | possible | possible | possible | possible | possible |
| Taking out method from twin screw extruder | | | - | strand | sheet | strand | strand | strand |
| Molding method | | | - | injection | press | injection | injection | injection |
| Molding temperature | | | °C | 300 | 280 | 300 | 300 | 300 |
| Physical properties | Volume resistivity in thickness direction | | Ω·cm | 7.5 × 10⁻¹ | 6.3 × 10⁻¹ | 8.3 × 10⁻¹ | 9.5 × 10⁻¹ | 7.0 × 10⁻¹ |
| | MFR measurement temperature | | °C | 320 | 320 | 320 | 320 | 320 |
| | MFR measurement load | | kg | 21.6 | 21.6 | 21.6 | 21.6 | 21.6 |
| | MFR | | g/10 min | 5.3 | 5.5 | 6.0 | 2.3 | 3.9 |
| | Flexural modulus | | MPa | 1,300 | 1,200 | 1,600 | 1,400 | 980 |
| | Flexural stress at yield | | MPa | 21 | 20 | 23 | 21 | 16 |
| | Flexural deformation at yield | | % | 4.8 | 4.3 | 5.1 | 5.2 | 5.2 |
| | Izod impact strength | | kJ/m² | 2.3 | 2.5 | 1.9 | 2.1 | 2.1 |

As shown in Table 3, Examples 6 to 14 containing the four components, i.e., the carbon nanotubes as the component (A), the olefin polymer as the component (B), the thermoplastic resin as the component (C), and the non-conductive filler as the component (D), in which the component (A), the component (B), and the component (D) were blended in the particular amounts provided a high conductivity with a volume resistivity in the thickness direction of 100 Ω·cm or less. A flexural deformation at yield of 4% or more and an Izod impact strength of 1.9 kJ/m² or more were achieved, and thus the resin compositions were considered to be suitable for a bipolar plate for redox flow batteries and a separator for fuel cells. Considering about the effect of the component (D), it is considered that with the component (D) blended, the component (A) is suppressed from being agglomerated, through the gathering of the component (A) on the surface of the component (D) in the process of solidifying the resin component constituted by the component (B) and the component (C), so as to perform efficiently electric connection among the carbon nanotubes as the component (A).

Examples 6 and 7 containing the component (D) in the particular amount provided a high conductivity even though the blended amount of the component (A) was decreased to 5% by mass.

On the other hand, Comparative Example 4 having a blended amount of the component (D) of 5% by mass provided a slight increase of the volume resistivity in the thickness direction as compared to Comparative Example 2 containing no component (D), but the extent of the increase was not large.

Comparative Example 5 having a blended amount of the component (A) of 40% by mass failed to be kneaded since the motor of the twin screw kneader was stopped due to overload.

### INDUSTRIAL APPLICABILITY

The molded article formed of the resin composition of the present invention or a resin composition containing the powdery mixture of the present invention has a high conductivity in the thickness direction, and is excellent in mechanical strength and deformability, and thus the molded article can be favorably used as a bipolar plate for redox flow batteries and a separator for fuel cells. The molded article is also suitable for the fields requiring a high conductivity, such as a plate heating element and a conductive tray.

## Claims

1. A resin composition comprising carbon nanotubes as a component (A), an olefin based polymer that satisfies the following conditions (1) to (3) as a component (B), and a thermoplastic resin as a component (C),
in which a blended amount of the component (A) is from 15 to 40% by mass with respect to 100% by mass of the total amount of the components (A) to (C), and a blended amount of the component (B) is from 0.5 to 2 times the blended amount of the component (A):
(1) a weight average molecular weight (Mw) of from 35,000 to 150,000,
(2) a molecular weight distribution (Mw/Mn) of 3 or less, and
(3) a softening point of from 80 to 130°C.

2. The resin composition according to claim 1, wherein the resin composition further comprises a non-conductive inorganic filler as a component (D),
a blended amount of the component (A) is from 5 to 35% by mass with respect to 100% by mass of the total amount of the components (A) to (D), and a blended amount of the component (D) is from 6 to 40% by mass with respect to 100% by mass of the total amount of the components (A) to (D).

3. The resin composition according to claim 1 or 2, wherein the component (C) is at least one selected from the group consisting of a polypropylene based resin, a polymethylpentene based resin, a syndiotactic polystyrene resin, a polyacetal resin, a polyamide resin, a polyphenylene sulfide resin, and a polybutylene terephthalate resin.

4. A method for producing the resin composition according to claim 1 or 3, comprising: agitating the component (A) and the component (B) at a temperature of 90°C or more and an agitation speed of 300 rpm or more to provide a mixture; and adding the mixture to the component (C) to provide a resin composition.

5. A method for producing the resin composition according to claim 2 or 3, comprising: agitating the component (A) and the component (B) at a temperature of 90°C or more and an agitation speed of 300 rpm or more to provide a mixture; and adding the mixture to the component (C) and the component (D) to provide a resin composition.

6. A powdery mixture comprising carbon nanotubes as a component (A) and an olefin based polymer that satisfies the following conditions (1) to (3) as a component (B),
in which a blended amount of the component (A) is 30% by mass or more and less than 70% by mass with respect to 100% by mass of the total amount of the component (A) and the component (B):
(1) a weight average molecular weight (Mw) of from 35,000 to 150,000,
(2) a molecular weight distribution (Mw/Mn) of 3 or less, and
(3) a softening point of from 80 to 130°C.

7. A molded article, which is formed of the resin composition according to any one of claims 1 to 3 or a resin composition containing the powdery mixture according to claim 6.

8. A bipolar plate for redox flow batteries, which is formed of the resin composition according to any one of claims 1 to 3 or a resin composition containing the powdery mixture according to claim 6.

9. A separator for fuel cells, which is formed of the resin composition according to any one of claims 1 to 3 or a resin composition containing the powdery mixture according to claim 6.
